(19) 

Europäisches
Patentamt
European
Patent Office
Office européen
des brevets

(11) **EP 3 522 073 A1**

(12) **EUROPEAN PATENT APPLICATION**

(43) Date of publication:
07.08.2019 Bulletin 2019/32

(51) Int Cl.:
***G06K 9/00*** (2006.01)

(21) Application number: 19152235.8

(22) Date of filing: 17.01.2019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 31.01.2018 CN 201810095668

(71) Applicant: **Ricoh Company, Ltd.**
**Tokyo 143-8555 (JP)**

(72) Inventor: **ZHAO, Ying**
**Haidian District, Beijing (CN)**

(74) Representative: **Watkin, Timothy Lawrence
Harvey
Marks & Clerk LLP
Fletcher House
The Oxford Science Park
Heatley Road
Oxford OX4 4GE (GB)**

(54) **METHOD AND APPARATUS FOR DETECTING ROAD SURFACE MARKING**

(57) A method and an apparatus for detecting a road surface marking are disclosed. The method includes receiving an input image of one frame; analyzing a contour feature of the input image, and extracting a region of interest including the road surface marking from the input image; searching the region of interest for a plurality of endpoints of the road surface marking; and determining the road surface marking by joining the plurality of endpoints.

FIG.1

EP 3 522 073 A1

Description

## BACKGROUND OF THE INVENTION

### 1. Field of the Invention

The present disclosure generally relates to the field of image recognition, and specifically, relates to a method and an apparatus for detecting a road surface marking.

### 2. Description of the Related Art

Road surface markings (pavement markings) provide important control information for driver assistance and automatic driving. The detection of road surface markings is affected by conditions such as camera conditions or road surface conditions. Thus, improvement of accuracy and computation speed is a major challenge for conventional detection methods.

## SUMMARY OF THE INVENTION

In view of the problem of the conventional technology, the present disclosure has an object to provide a method and an apparatus capable of accurately detecting a road surface marking.

According to an aspect of the present invention, a method for detecting a road surface marking includes receiving an input image of one frame; analyzing a contour feature of the input image, and extracting a region of interest including the road surface marking from the input image; searching the region of interest for a plurality of endpoints of the road surface marking; and determining the road surface marking by joining the plurality of endpoints.

According to another aspect of the present invention, an apparatus for detecting a road surface marking includes a receiving unit configured to receive an input image of one frame; an extracting unit configured to analyze a contour feature of the input image, and extract a region of interest including the road surface marking from the input image; a searching unit configured to search the region of interest for a plurality of endpoints of the road surface marking; and a determining unit configured to determine the road surface marking by joining the plurality of endpoints.

According to another aspect of the present invention, a device for detecting a road surface marking includes a memory storing computer-readable instructions; and one or more processors configured to execute the computer-readable instructions. The computer-executable instructions, when executed, cause the one or more processors to carry out the method for detecting a road surface marking according to the aspect of the present invention.

According to another aspect of the present invention, a non-transitory computer-readable recording medium having computer-executable instructions for execution by one or more processors is provided. The computer-executable instructions, when executed, cause the one or more processors to carry out the method for detecting a road surface marking according to the aspect of the present invention.

In the method and the apparatus for detecting a road surface marking according to embodiments of the present invention, accurate position information of a road surface marking can be detected by detecting endpoints of the road surface marking.

## BRIEF DESCRIPTION OF THE DRAWINGS

FIG. 1 is a flowchart illustrating a road surface marking detecting method according to a first embodiment of the present invention;
FIG. 2 is a flowchart illustrating a step of extracting a region of interest in the road surface marking detecting method according to the first embodiment of the present invention;
FIG. 3 is a flowchart illustrating a step of searching for endpoints in the road surface marking detecting method according to the first embodiment of the present invention;
FIG. 4A is a schematic diagram illustrating projection of a contour in a region of interest on a Y-axis according to a first example of the first embodiment of the present invention, and FIG. 4B is a schematic diagram illustrating the region of interest according to the first example of the first embodiment of the present invention;
FIG. 5 is a flowchart illustrating a step of searching the region of interest for a left endpoint and a right endpoint of a stop line according to the first example of the first embodiment of the present invention;
FIG. 6 is a schematic diagram illustrating movement process of a left initial search point;
FIGs. 7A and 7B are schematic diagrams illustrating a case where an initial search point cannot reach a connection point between a curved lane line and a stop line, and FIG. 7C is a schematic diagram illustrating a case where there is only a lane line of one side in a stop line region;
FIG. 8 is a flowchart illustrating a step of searching a region of interest for a left endpoint and a right endpoint of a stop line according to a second example of the first embodiment of the present invention;
FIGs. 9A and 9B are schematic diagrams illustrating a step of adding endpoints into a candidate endpoint set in an example of a left candidate endpoint;
FIG. 10 is a schematic diagram illustrating a region of interest according to a third example of the first embodiment of the present invention;
FIG. 11 is a flowchart illustrating a step of searching a region of interest for a left endpoint and a right endpoint of a rhombus marking according to a third example of the first embodiment of the present invention;

FIG. 12 is a block diagram illustrating a functional configuration of a road surface marking detecting apparatus according to a second embodiment of the present invention;

FIG. 13 is a block diagram illustrating a functional configuration of an extracting unit in the road surface marking detecting apparatus according to the second embodiment of the present invention;

FIG. 14 is a block diagram illustrating a functional configuration of a searching unit of the road surface marking detecting apparatus according to the second embodiment of the present invention;

FIG. 15 is a block diagram illustrating a functional configuration of a searching unit in the road surface marking detecting apparatus according to a first example of the second embodiment of the present invention;

FIG. 16 is a block diagram illustrating a functional configuration of a searching unit in the road surface marking detecting apparatus according to a second example of the second embodiment of the present invention;

FIG. 17 is a block diagram illustrating a functional configuration of a searching unit in the road surface marking detecting apparatus according to a third example of the second embodiment of the present invention;

FIG. 18 is a block diagram illustrating a hardware configuration of a road surface marking detecting device according to a third embodiment of the present invention; and

FIG. 19 is a schematic diagram illustrating a non-transitory computer-readable recording medium according to a fourth embodiment of the present invention.

## DESCRIPTION OF THE EMBODIMENTS

In the following, specific embodiments of the present invention will be described in detail with reference to the accompanying drawings, so as to facilitate the understanding of technical problems to be solved by the present invention, technical solutions of the present invention, and advantages of the present invention. The present invention is not limited to the specifically disclosed embodiments, and various modifications, combinations and replacements may be made without departing from the scope of the present invention.

[First Embodiment]

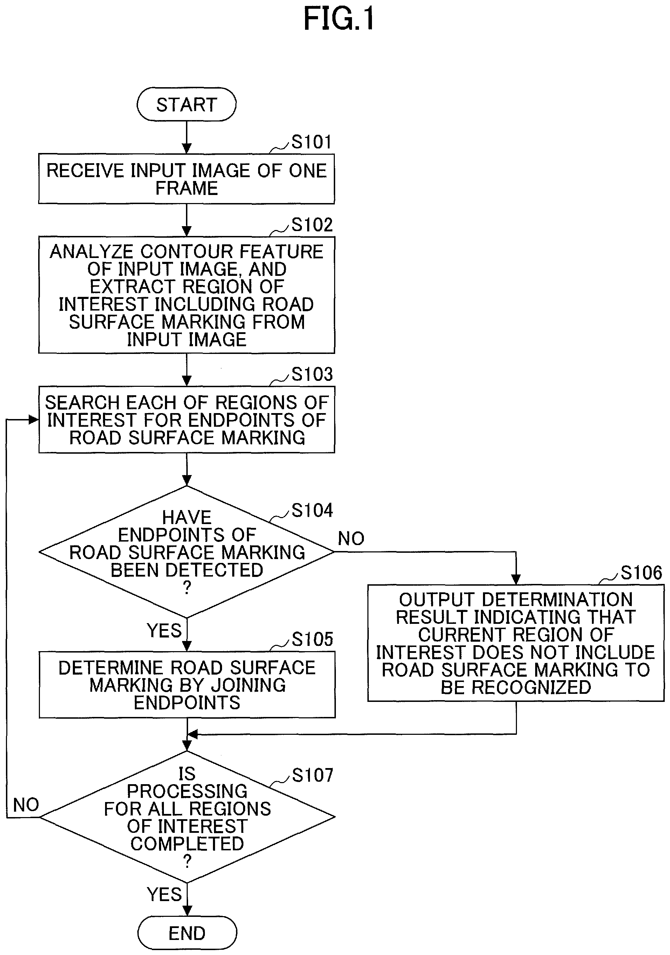

FIG. 1 is a flowchart illustrating a road surface marking detecting method according to a first embodiment of the present invention. As illustrated in FIG. 1, the road surface marking detecting method according to the first embodiment of the present invention includes the following steps.

First, in step S101, an input image of one frame is received. For example, the input image of the one frame may be obtained by a camera disposed on a vehicle.

Then, in step S102, a contour feature of the input image is analyzed, and a region of interest (ROI) including a road surface marking is extracted from the input image. The number of the extracted regions of interest may be one or more. As an example, the road surface marking to be recognized may be a stop line, namely, a position where a vehicle stops while waiting for a red light. The stop line is a horizontal straight line that intersects with a lane line. Note that the present invention is not limited to the above example. Alternatively, the road surface marking to be recognized may be a rhombus traffic marking (also referred to as a "pedestrian crossing warning marking"), namely, a rhombus marking painted in the middle of a lane for warning a driver to slow down and pay attention to pedestrians crossing the road using a pedestrian crossing where the vehicle is approaching.

Next, in step S103, each of the regions of interest (ROIs) is searched for a plurality of endpoints of the road surface marking.

Next, in step S104, it is determined whether the plurality of endpoints of the road surface marking have been detected. Namely, it is determined whether all endpoints for determining the road surface marking have been detected. If the determination result of step S104 is YES, processing proceeds to step S105. In step S105, the road surface marking is determined by joining the plurality of endpoints.

If the determination result of step S104 is NO, processing proceeds to step S106. In step S106, a determination result indicating that the current region of interest does not include the road surface marking to be recognized is output, and processing proceeds to step S107. In step S107, it is determined whether processing for all regions of interest is completed. If the determination result of step S107 is YES, processing is terminated. If the determination result of step S107 is NO, processing returns to step S103, and processing for the next region of interest is continued.

In the road surface marking detecting method according to the first embodiment of the present invention, accurate position information of a road surface marking can be detected by detecting endpoints of the road surface marking.

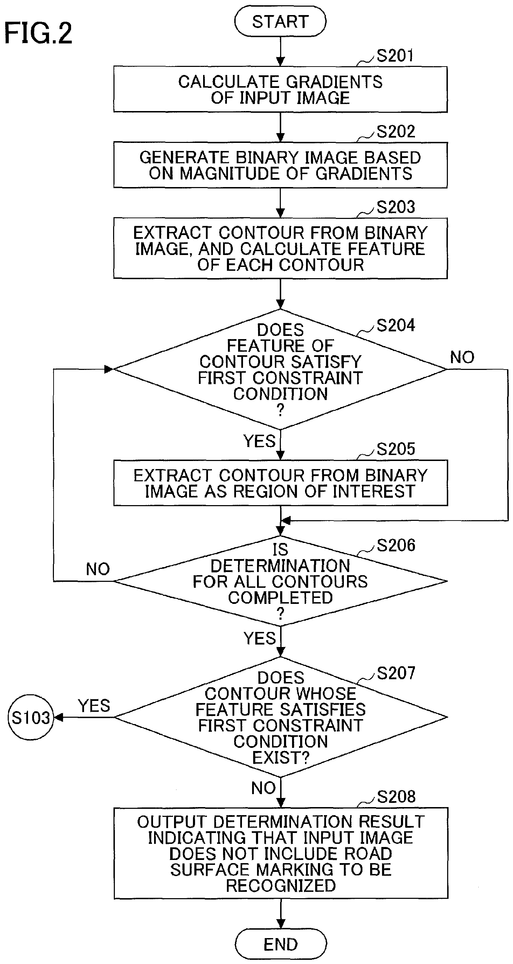

FIG. 2 is a flowchart illustrating detailed processing of step S102 in FIG. 1. As illustrated in FIG. 2, the step of analyzing the contour feature of the input image and extracting the region of interest including the road surface marking from the input image includes the following steps.

First, in step S201, gradients of the input image are calculated.

Then, in step S202, a binary image is generated based on magnitude of the gradients. For example, a value of a pixel whose magnitude of gradient is greater than a predetermined threshold is set to 1, and a value of a pixel whose magnitude of gradient is less than or equal to the predetermined threshold is set to 0.

Next, in step S203, at least one contour is extracted from the binary image, and a feature of the at least one contour is calculated.

Since road surface markings usually have distinctive properties, such as a range of direction, area or aspect ratio of a region corresponding to a road surface marking within a predetermined threshold range, another contour in the input image that does not relate to the road surface marking to be recognized may be removed by setting an appropriate constraint condition. As an example, a contour of a stop line can be distinguished from another contour on the road surface such as a pedestrian crossing, by setting a constraint condition that an aspect ratio of a contour is greater than a predetermined threshold. As another example, a contour of a rhombus marking can be distinguished from another contour on the road surface, by setting a constraint condition that an area of a contour is greater than a predetermined threshold.

In step S204, for each of the extracted contours, it is determined whether the feature of the contour satisfies a first constraint condition.

If it is determined in step S204 that the first constraint condition is satisfied, processing proceeds to step S205. In step S205, the contour is extracted as the region of interest from the binary image.

If it is determined in step S204 that the first constraint condition is not satisfied, processing proceeds to step S206. In step S206, it is determined whether determination for all contours is completed. If the determination result of step S206 is YES, processing proceeds to step S207. In step S207, it is determined whether a contour whose feature satisfies the first constraint condition exists, namely, it is determined whether the number of contours whose feature satisfies the first constraint condition is greater than zero. If the determination result of step S207 is YES, processing proceeds to step S103 in FIG. 1 to continue subsequent processing. If the determination result of step S207 is NO, processing proceeds to step S208. In step S208, a determination result indicating that the input image does not include the road surface marking to be recognized is output, and processing is terminated.

If it is determined in step S206 that determination for all contours is not completed, processing returns to step S204, and determination for a subsequent contour is continued.

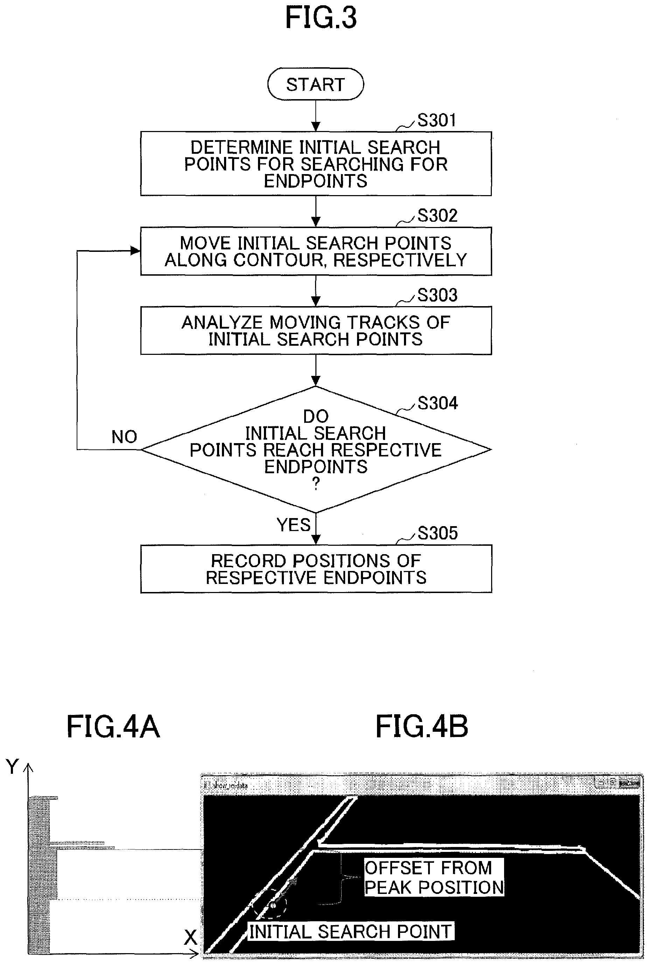

FIG. 3 is a flowchart illustrating detailed processing of step S103 in FIG. 1. As illustrated in FIG. 3, the step of searching the region of interest for the plurality of endpoints of the road surface marking includes the following steps.

First, in step S301, a plurality of initial search points for searching for the plurality of endpoints are determined.

Then, in step S302, the plurality of initial search points are moved along the contour, respectively. Namely, the plurality of initial search points are moved along respective portions of the contour where the respective initial search points are located.

Next, in step S303, moving tracks of the initial search points are analyzed, and in step S304, it is determined whether the initial search points reach the respective endpoints.

When it is determined in step S304 that the initial search points reach the respective endpoints, processing proceeds to step S305. In step S305, positions of the respective endpoints are recorded.

When it is determined in step S304 that the initial search points do not reach the respective endpoints, processing returns to step S302, and the moving of the initial search points is continued from the current position.

In the following, detailed processing of the step of searching the region of interest for the plurality of endpoints of the road surface marking in the road surface marking detecting method according to specific examples of the first embodiment of the present invention will be described.

[First Example]

In a first example, the road surface marking is a stop line, the plurality of initial search points includes a left initial search point and a right initial search point, and the plurality of endpoints includes a left endpoint and a right endpoint. Once the left endpoint and the right endpoint of the stop line are determined, an accurate position of the stop line can be determined.

FIG. 4A is a schematic diagram illustrating projection of a contour in a region of interest on a Y-axis according to a first example of the first embodiment of the present invention, and FIG. 4B is a schematic diagram illustrating the region of interest according to the first example of the first embodiment of the present invention. As illustrated in FIG. 4B, in the region of interest, pixel values of points of a contour are 1, and these points of the contour are shown in white in FIG. 4B; and pixel values of points other than the contour are 0, and these points other than the contour are shown in black in FIG. 4B. In the binary image illustrated in FIG. 4B, pixels whose value is 1 represent a valid region, and pixels whose value is 0 represent an invalid region.

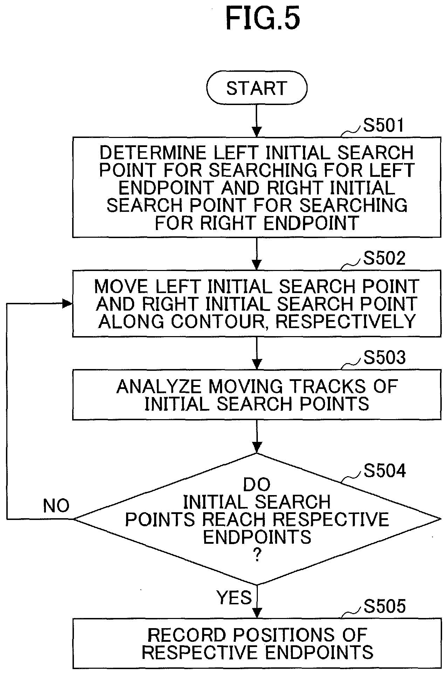

FIG. 5 is a flowchart illustrating a step of searching the region of interest for a left endpoint and a right endpoint of a stop line according to the first example of the first embodiment of the present invention.

As illustrated in FIG. 5, first, in step S501, a plurality of initial search points for searching for the plurality of endpoints are determined.

Referring to FIGs. 4A and 4B, an example of the left endpoint will be described, and processing for the right endpoint is similar to processing for the left endpoint.

Specifically, projection of each pixel in the region of interest on a Y-axis is calculated. Note that, only valid pixels can be projected. As illustrated in FIG. 4B, the stop line is a horizontal line. It can be understood that a position of a row in the image that corresponds to a projection peak on the Y-axis where a largest of number of pixels are projected is a position close to the stop line. Accordingly, a starting row of the initial search points, namely a coordinate on the Y-axis of the initial search points is determined based on a projection position on the Y-axis where a largest of number of pixels are projected. In actuality, in consideration of the presence of noise interference, a position offset downward from the above peak position is usually set as a starting row of the initial search points, so that the initial search points can be moved upward along a valid contour.

Then, a horizontal line is drawn on the starting row, intersection points between the contour (such as possible lane lines) in the region of interest and the horizontal line are detected, and the number of the intersection points between the possible lane lines and the horizontal line is determined. Here, as an example, a template matching method may be used as the detection method. Then, a starting column of the initial search points is determined based on position distribution of the intersection points. Since the intersection points (connection points) between a lane line and a stop line exist inside a valid contour, column positions of the intersection points have a distinctive feature. Thus, it may be determined whether the detection result of the intersection points satisfies a constraint condition, for example, it may be determined whether the number of the intersection points is within a certain range, or it may be determined whether the intersection points are distributed on both sides of the region of interest. If the detection result of the intersection points satisfies the constraint condition, the starting row and the starting column of the initial search points, namely the coordinate on the Y-axis and a coordinate on an X-axis of the initial search points are output. If the detection result of the intersection points does not satisfy the constraint condition, it is determined that the region of interest does not include a stop line.

Next, in step S502, the left initial search point and the right initial search point are moved along the contour, respectively.

A moving direction of the initial search point includes a main direction and an orthogonal direction orthogonal to the main direction. The main direction of the left initial search point is a right direction, and the main direction of the right initial search point is a left direction.

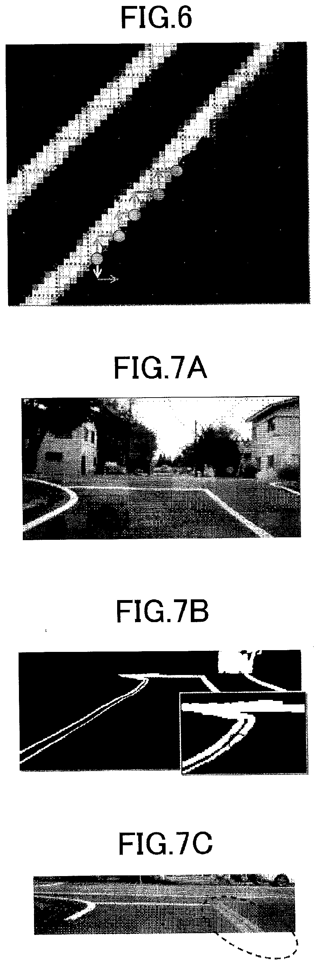

The detailed processing of moving is as follows. The initial search points are moved in an upward direction until the initial search points reach respective pixels whose pixel value is zero, then the initial search points are moved in the respective main directions from respective current positions until the initial search points reach respective pixels whose pixel value is zero. The above movement process is repeated in a manner that the initial search points are moved in the upward direction and then in the respective main directions. Note that each round of moving includes moving in the upward direction and moving in the respective main directions. FIG. 6 is a schematic diagram illustrating movement process of a left initial search point. As illustrated in FIG. 6, the left initial search point is moved in the upward direction until the left initial search point reaches a pixel whose pixel value is zero, then the left initial search point is moved in the right direction from current position until the left initial search point reaches a pixel whose pixel value is zero.

Next, in step S503, moving tracks of the initial search points are analyzed. Next, in step S504, it is determined whether the initial search points reach the respective endpoints.

The step of analyzing the moving tracks of the initial search points and determining whether the initial search points reach the respective endpoints specifically includes the following step. It is determined whether the initial search points reach respective connection points (intersection points) between the contour and a horizontal stop line, by analyzing respective lengths of the moving tracks of the initial search points in the respective main directions.

As an example of the left initial search point, the movement amount of each time of moving in the right direction is monitored, and a condition that the movement amount of moving in the right direction is greater than a predetermined threshold is set as a search termination condition. That is to say, when the movement amount in the right direction is greater than the predetermined threshold, it is determined that the left initial search point has reached the left endpoint.

Preferably, the step of analyzing the moving tracks of the initial search points and determining whether the initial search points reach the respective endpoints may include (a) determining whether a second constraint condition is satisfied; and (b) continuing determining whether the initial search points reach the respective connection points between the contour and the horizontal stop line, when the second constraint condition is satisfied.

Specifically, in the process of moving the initial search points, it may be further determined whether constraint conditions expressed by formulas (1) and (2) are satisfied.

$$\begin{cases} I(x, y\text{-}\Delta y_i) = 1 \\ I(x + \Delta x_i, y\text{-}\Delta y_i) = 1 \\ I(x, y + \Delta y_i) = 0 \qquad (1) \\ k_i = \dfrac{\Delta y_i}{\Delta x_i} \end{cases}$$

Where I is a region of interest in a binary image, I(x, y) represents a pixel value of a search point in I, $\Delta x_i$

and $\Delta y_i$ are offsets of i-th movement of the search point in the main direction and the orthogonal direction orthogonal to the main direction, respectively, and $k_i$ represents a search direction. I(x, y-$\Delta y_i$)=1 indicates that a pixel value obtained by moving the search point upward by one step is 1, I(x, y+$\Delta y_i$)=0 indicates that a pixel value obtained by moving the search point downward by one step is 0, and I(x+$\Delta x_i$, y-$\Delta y_i$)=1 indicates that a pixel value obtained by moving the search point upward by one step and then rightward by one step is 1. Here, an XY coordinate system is defined such that a positive direction of an X-axis is horizontally rightward, a positive direction of a Y-axis is vertically downward, and an origin of the coordinate is located at an upper left corner.

As indicated by constraint conditions expressed by formula (1), when moving the search point upward, it is determined not only whether a pixel value obtained by moving the search point upward by one step is 1, but also whether a pixel value obtained by moving the search point downward by one step is 0. If a pixel value obtained by moving the search point upward by one step is 1 and a pixel value obtained by moving the search point downward by one step is also 1, namely, if the constraint conditions expressed by formula (1) are not satisfied, it is determined that the contour is not a contour to be detected, and processing proceeds to step S106 in FIG. 1. If a pixel value obtained by moving the search point upward by one step is 1 and a pixel value obtained by moving the search point downward by one step is 0, namely, if the constraint conditions expressed by formula (1) are satisfied, the following moving is continued.

$$\begin{cases} |k_i - \overline{k}_{i-1}| < thr1 \\ \overline{k}_{i-1} = \dfrac{1}{i-1}\sum_{j=1}^{i-1} k_j \\ \sum_i \Delta x_i > thr2 \\ \sum_i \Delta y_i > thr3 \end{cases} \qquad (2)$$

Where thr1 is a constraint threshold of the search direction for ensuring that a moving direction approaches to an average direction of previous movements, thr2 is a constraint threshold of a search length in the main direction, and thr3 is a constraint threshold of a search length in the orthogonal direction. The constraint thresholds of the search lengths in the main direction and the orthogonal direction may be constraint conditions for further verification when a search termination condition has been satisfied. Alternatively, the constraint thresholds of the search lengths in the main direction and the orthogonal direction may be determination conditions for terminating the search or re-adjusting the initial search points when a search termination condition has not been satisfied.

By setting the above constraint conditions, a contour that might not be a stop line to be recognized can be removed, and a probability of erroneous determination can be reduced.

When it is determined in step S504 that the initial search points reach the respective endpoints, processing proceeds to step S505. In step S505, positions of the respective endpoints are recorded. Specifically, a starting position of the current movement is recorded as a position of the left endpoint.

The process of determining the right endpoint is similar to the process of determining the left endpoint, and its description is omitted here.

[Second Example]

The above first example is a case where the condition of the road surface marking is ideal. By the above processing in the first example, the left and right initial search points can reach the positions of the left and right endpoints, respectively. However, in actuality, there are cases where left and right endpoints cannot be successfully found. For example, FIGs. 7A and 7B illustrate a case where an initial search point cannot reach a connection point between a curved lane line and a stop line. FIG. 7A illustrates an actual condition of a road surface, and FIG. 7B illustrates a binary image including a contour to be recognized. In this case, since the lane line is curved, an initial search point cannot reach the connection point between the curved lane line and the stop line by the moving described above. As another example, there might be a case where a search point stops at an abnormal point and the search cannot be continued since a road surface marking is broken. Furthermore, in many cases, there is only a lane line of one side in a stop line region as illustrated in FIG. 7C, however the method of searching for endpoints according to the above first example cannot be performed for another side without a lane line. The method of searching for endpoints according to the second example can be applied to a case where the road surface marking is not ideal.

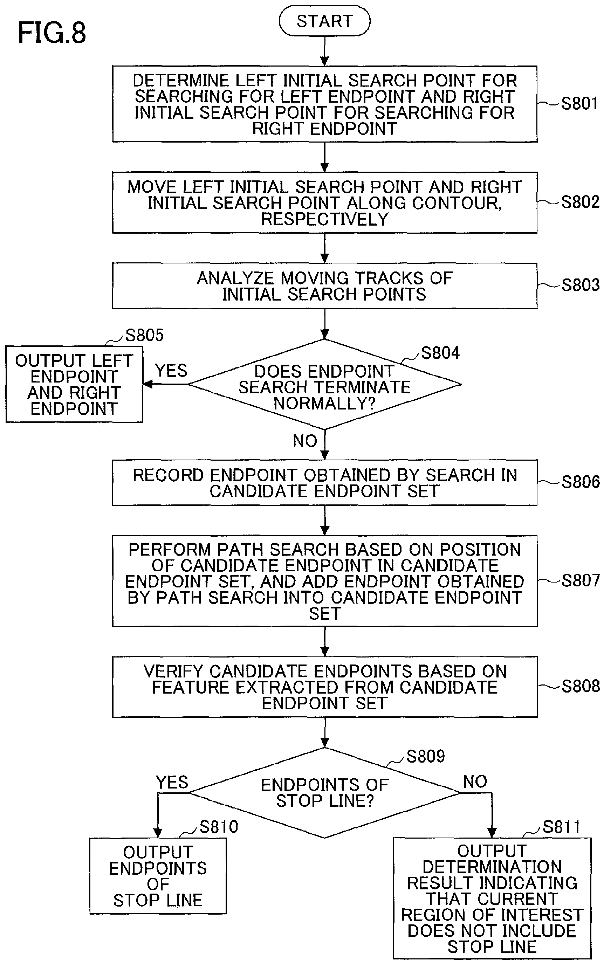

FIG. 8 is a flowchart illustrating a step of searching a region of interest for a left endpoint and a right endpoint of a stop line according to a second example of the first embodiment of the present invention.

As illustrated in FIG. 8, similarly to the first example, first, in step S801, a plurality of initial search points for searching for the plurality of endpoints are determined. Then, in step S802, a left initial search point and a right initial search point are moved along the contour, respectively. Next, moving tracks of the initial search points are analyzed.

The second example is different from the first example in that the second example further includes steps of optimization and verification of endpoints.

In step S804, it is determined whether endpoint search terminates normally. The normal termination means that left and right endpoints are determined when the above search termination condition is satisfied, and this case corresponds to the case described in the first example. If it is determined in step S804 that endpoint search terminates normally, processing proceeds to step S805. In step S805, the left and right endpoints are output.

If it is determined in step S804 that endpoint search does not terminate normally, processing proceeds to step S806. Abnormal termination of the search includes but is not limited to the following cases. For example, a search point stops at an abnormal point and cannot be further moved in a search process using an initial search point, since a road surface marking is not ideal. Alternatively, only an endpoint on one side can be found, since there is only a lane line of one side in a stop line region.

In step S806, an endpoint obtained by the search is recorded in a candidate endpoint set. Specifically, if an initial search point stops at a position and cannot be further moved, the position where the initial search point finally reaches is recorded as a candidate endpoint in a candidate endpoint set. Alternatively, if only a left endpoint corresponding to a left initial search point or a right endpoint corresponding to a right initial search point was found, the left endpoint or the right endpoint is recorded as a candidate endpoint in a candidate endpoint set.

Next, in step S807, a path search is performed based on position of a candidate endpoint in the candidate endpoint set, and an endpoint obtained by the path search is added into the candidate endpoint set.

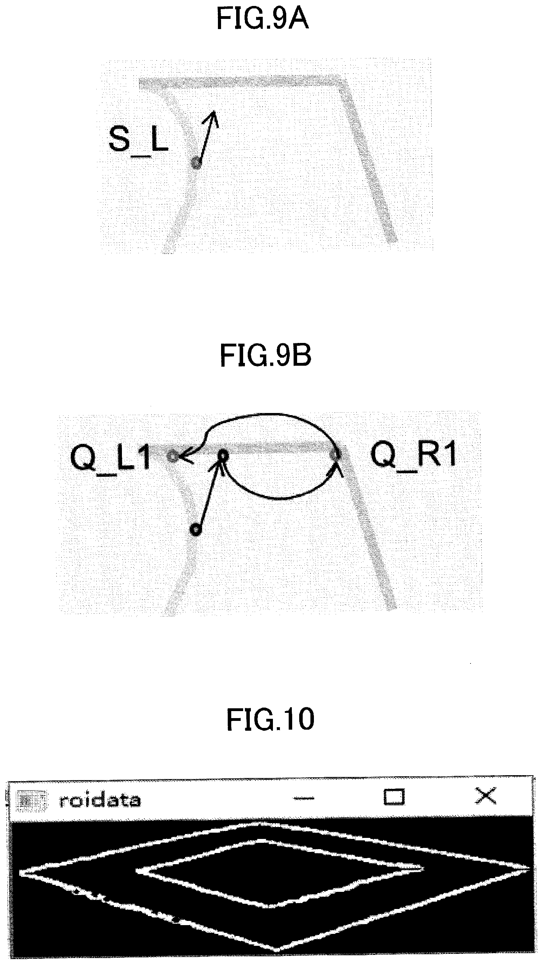

FIGs. 9A and 9B illustrate a detailed processing of step S807 in an example of a left candidate endpoint. First, point S_L in the candidate endpoint set is set as a starting point of the path search, point S_L is moved in a historical path direction until a moving track intersects with a straight line in a horizontal direction at an intersection point, and the intersection point is set as a path search point. Here, the historical path direction may be a slope of a previous movement immediately before a current movement, and may also be an average slope of all previous movements.

Next, the path search point is moved in the main direction, namely, the path search point is moved rightward as illustrated in FIG. 9B, and it is determined whether the path search point reaches an endpoint on a side of the main direction.

For example, since a connection point between a stop line and a lane line is an inside point inside of the lane line, it may be determined whether the path search point reaches a right endpoint, by determining whether a pixel value obtained by moving the path search point rightward is 1, a pixel value obtained by moving the path search point upward is 1 and a pixel value obtained by moving the path search point downward is 1.

Preferably, in the process of the path search, it may be further determined whether constraint conditions expressed by formulas (3) and (4) are satisfied.

$$\begin{cases} I(x, y + \Delta y_i) = 0 \\ I(x + \Delta x_i, y) = 1 \\ I(x, y - \Delta y_i) = 1 \\ k_i = \dfrac{\Delta y_i}{\Delta x_i} \end{cases} \quad (3)$$

Where I is a region of interest in a binary image, I(x, y) represents a pixel value of a search point in I, $\Delta x_i$ and $\Delta y_i$ are offsets of i-th movement of the search point in the main direction and the orthogonal direction orthogonal to the main direction, respectively, and $k_i$ represents a search direction. I(x, y+$\Delta y_i$)=0 indicates that a pixel value obtained by moving the search point downward by one step is 0, I(x+$\Delta x_i$, y)=1 indicates that a pixel value obtained by moving the search point rightward by one step is 1, and I(x, y-$\Delta y_i$)=1 indicates that a pixel value obtained by moving the search point upward by one step is 1. Here, an XY coordinate system is defined such that a positive direction of an X-axis is horizontally rightward, a positive direction of a Y-axis is vertically downward, and an origin of the coordinate is located at an upper left corner.

As indicated by constraint conditions expressed by formula (3), when moving the search point rightward, it is determined whether a pixel value obtained by moving the search point upward by one step is 1, whether a pixel value obtained by moving the search point downward by one step is 0, and whether a pixel value obtained by moving the search point rightward by one step is 1. If the constraint conditions expressed by formula (3) are not satisfied, it is determined that the contour is not a contour to be detected, and processing proceeds to step S106 in FIG. 1. If the constraint conditions expressed by formula (3) are satisfied, the following moving is continued.

$$\begin{cases} | k_i - \overline{k}_{i-1} | < thr4 \\ \overline{k}_{i-1} = \dfrac{1}{i-1} \sum_{j=1}^{i-1} k_j \\ \sum_i \Delta x_i > thr5 \\ \sum_i \Delta y_i > thr6 \end{cases} \quad (4)$$

Where thr4 is a constraint threshold of the search direction for ensuring that a moving direction approaches to an average direction of previous movements, thr5 is a constraint threshold of a search length in the main direction, and thr6 is a constraint threshold of a search length in the orthogonal direction. The constraint thresholds of the search lengths in the main direction and the orthogonal direction may be constraint conditions for further verification when a search termination condition has been satisfied. Alternatively, the constraint thresholds of the search lengths in the main direction and the orthogonal direction may be determination conditions for terminating the search or re-adjusting the initial search points when a search termination condition has not been satisfied.

By setting the above constraint conditions, a contour that might not be a stop line to be recognized can be removed, and a probability of erroneous determination can be reduced.

When it is determined that the path search point reaches the endpoint on the side of the main direction, the endpoint on the side of the main direction, namely point Q_R1 in FIG. 9B is obtained. Then, endpoint Q_R1 is moved in an opposite direction opposite to the main direction to perform a search, it is determined whether the endpoint reaches an endpoint on a side of the opposite direction, and an opposite endpoint, namely point Q_L1 in FIG. 9B is obtained.

Endpoint Q_R1 on the side of the main direction and endpoint Q_L1 on the side of the opposite direction are added into the candidate endpoint set.

Next, in step S808, the candidate endpoints are verified based on a feature extracted from the candidate endpoint set. Specifically, the candidate endpoints in the candidate endpoint set are classified into candidate left endpoints and candidate right endpoints. Each of the candidate left endpoints and each of the candidate right endpoints are combined to form left-and-right point pairs and respective candidate lines. Then, features of the candidate lines, such as slopes, average values of Y-axis coordinates, average values of color, neighborhood differences in color or the like are extracted.

In step S809, it is determined whether the endpoints are endpoints of a stop line. It may be determined whether the endpoints are endpoints of a stop line, by determining whether the features of the candidate lines satisfy a third constraint condition (for example, whether the slopes are within a certain range).

If it is determined in step S809 that the endpoints are endpoints of a stop line, processing proceeds to step S810, and the endpoints of the stop line are output. If it is determined in step S809 that the endpoints are not endpoints of a stop line, processing proceeds to step S811, a determination result indicating that the current region of interest does not include a stop line is output, and processing is terminated.

In the second example, the method for detecting a stop line including the process of optimization and verification of endpoints can be applied to various road surface conditions.

[Third Example]

In the first example and the second example, the road surface marking detecting methods are described by taking a stop line as an example. However, the present invention is not limited to these examples. In a third example, the road surface marking may be a rhombus marking for warning a driver to slow down. The plurality of initial search points includes a left initial search point and a right initial search point, and the plurality of endpoints includes a left endpoint, a right endpoint and a bottom endpoint. Once the left endpoint, the right endpoint and the bottom endpoint of the rhombus marking are determined, an accurate position of the rhombus marking can be determined.

FIG. 10 is a schematic diagram illustrating a region of interest according to a third example of the first embodiment of the present invention. As illustrated in FIG. 10, in the region of interest, pixel values of points of a contour are 1, and these points of the contour are shown in white in FIG. 10; and pixel values of points other than the contour are 0, and these points other than the contour are shown in black in FIG. 10. In the binary image illustrated in FIG. 10, pixels whose value is 1 represent a valid region, and pixels whose value is 0 represent an invalid region.

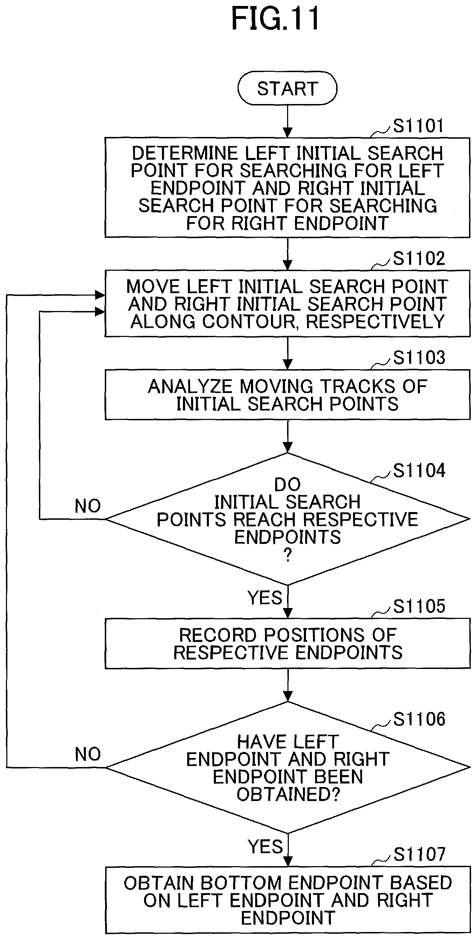

FIG. 11 is a flowchart illustrating a step of searching a region of interest for a left endpoint and a right endpoint of a rhombus marking according to a third example of the first embodiment of the present invention.

As illustrated in FIG. 11, first, in step S1101, a left initial search point for searching for the left endpoint and a right initial search point for searching for the right endpoint are determined. As important information that simplifies the calculation for searching the bottom endpoint, the left endpoint and the right endpoint are first obtained. In order to perform the search more efficiently, a starting point as close as possible to a real ending point is selected. According to the structure of the rhombus marking, the contour of the rhombus marking in a gradient image is a dual-rhombus shape. The contour is divided into segments with a zero gradient value by scanning lines crossing the contour, and each of the scanning lines intersects with the contour at two to four intersection points. The longest segment is near a center of the rhombus shape. After a segment with a largest blank position inside the rhombus shape is found, the first and last intersections are obtained as the left and right initial search points.

Then, in step S1102, the left initial search point and the right initial search point are moved along the contour, respectively. Namely, the left initial search point and the right initial search point are moved along respective portions of the contour where the respective initial search points are located.

In a binary image, the endpoint of the rhombus shape is a corner, and there are three neighborhood pixels with a zero pixel value in the four neighborhood pixels of the endpoint. According to this principle, a searching method in an orthogonal direction is proposed to make a starting point reach a real ending point. More specifically, the initial search points are alternately moved in respective main directions and respective orthogonal directions. As an example of the left endpoint, the main directions are left and right directions, and the orthogonal directions are a vertically upward direction and a vertically downward direction. In this way, if the contour is an actual rhombus shape, the initial search points can be moved along an outer edge and reach an ending point. For the right search, a starting point is first moved to the outer edge, since intersection points occur on an inner edge.

Next, in step S1103, moving tracks of the initial search points are analyzed. Next, in step S1104, it is determined whether the initial search points reach the respective endpoints.

When it is determined in step S1104 that the initial search points reach the respective endpoints, processing proceeds to step S1105. In step S1105, positions of the respective endpoints are recorded.

Next, in step S1106, it is determined whether a left endpoint and a right endpoint have been obtained. If the determination result of step S1106 is YES, processing proceeds to step S1107. In step S1107, a bottom endpoint is obtained based on the left endpoint and the right endpoint. Specifically, after the left and right endpoints are obtained, a search area of the bottom endpoint is narrowed. In the new search area, the number of intersection points between the scanning lines and the contour is calculated. The bottom endpoint can be found based on the scanning line with only one intersection point.

In addition, more preferably, the endpoints may be further verified to reduce a probability of erroneous determination.

Specifically, since the road surface markings are usually painted in white, the three endpoints may be verified based on color information. According to the binary image, a sampling for pixels near the obtained endpoints that belong to the rhombus shape and to a road region is performed. Then, a similarity of the two sets of pixels is calculated. If the similarity is too high, the endpoint will be abandoned.

However, the color information is not stable enough due to changes in lighting. Therefore, the endpoints are further verified based on relative positions and proportional relationships among the endpoints. Furthermore, the endpoints are also verified based on whether there is a linear path between the left (right) endpoint and the bottom endpoint. A sample is selected by finding an intersection point of scanning lines, and a contour between a lower endpoint and a left endpoint. Then, slopes of lines formed by the endpoints and the sample are calculated. The endpoint is accepted only if all slopes are similar to a lower left direction.

[Second Embodiment]

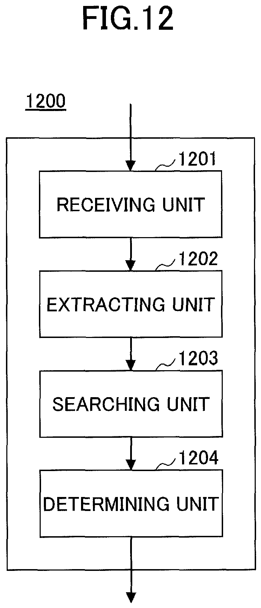

Hereinabove, the road surface marking detecting method according to the first embodiment of the present invention has been described in detail with reference to FIGs. 1 to 11. In the following, a road surface marking detecting apparatus according to a second embodiment of the present invention will be described with reference to FIG. 12.

FIG. 12 is a block diagram illustrating a functional configuration of a road surface marking detecting apparatus according to a second embodiment of the present invention. As illustrated in FIG. 12, the road surface marking detecting apparatus 1200 according to the second embodiment of the present invention includes a receiving unit 1201, an extracting unit 1202, a searching unit 1203, and a determining unit 1204.

The receiving unit 1201 receives an input image of one frame. For example, the input image of the one frame may be obtained by a camera disposed on a vehicle.

The extracting unit 1202 analyzes a contour feature of the input image, and extracts a region of interest (ROI) including a road surface marking from the input image. The number of the extracted regions of interest may be one or more. As an example, the road surface marking to be recognized may be a stop line, namely, a position where a vehicle stops while waiting for a red light. The stop line is a horizontal straight line that intersects with a lane line. Note that the present invention is not limited to the above example. Alternatively, the road surface marking to be recognized may be a rhombus traffic marking (also referred to as a "pedestrian crossing warning marking"), namely, a rhombus marking painted in the middle of a lane for warning a driver to slow down and pay attention to pedestrians crossing the road using a pedestrian crossing where the vehicle is approaching.

The searching unit 1203 searches each of the regions of interest (ROIs) for a plurality of endpoints of the road surface marking.

The determining unit 1204 determines whether the plurality of endpoints of the road surface marking have been detected.

In the road surface marking detecting apparatus according to second embodiment of the present invention, accurate position information of a road surface marking can be detected by detecting endpoints of the road surface marking.

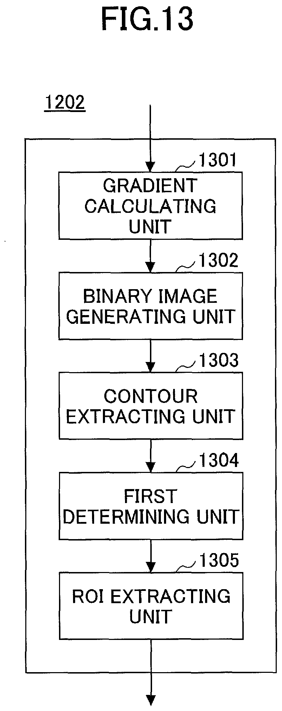

FIG. 13 is a block diagram illustrating a detailed configuration of the extracting unit 1202 in FIG. 12. As illustrated in FIG. 13, the extracting unit 1202 includes a gradient calculating unit 1301, a binary image generating unit 1302, a contour extracting unit 1303, a first determining unit 1304, and a ROI (region of interest) extracting unit 1305.

The gradient calculating unit 1301 calculates gradients of the input image.

The binary image generating unit 1302 generates a binary image based on magnitude of the gradients. For example, a value of a pixel whose magnitude of gradient is greater than a predetermined threshold is set to 1, and a value of a pixel whose magnitude of gradient is less than or equal to the predetermined threshold is set to 0.

The contour extracting unit 1303 extracts at least one contour from the binary image, and calculates a feature of the at least one contour.

Since road surface markings usually have distinctive properties, such as a range of direction, area or aspect ratio of a region corresponding to a road surface marking within a predetermined threshold range, another contour in the input image that does not relate to the road surface marking to be recognized may be removed by setting an appropriate constraint condition. As an example, a contour of a stop line can be distinguished from another contour on the road surface such as a pedestrian crossing, by setting a constraint condition that an aspect ratio of a contour is greater than a predetermined threshold. As another example, a contour of a rhombus marking can be distinguished from another contour on the road surface, by setting a constraint condition that an area of a contour is greater than a predetermined threshold.

For each of the extracted contours, the first determining unit 1304 determines whether the feature of the contour satisfies a first constraint condition.

If it is determined that the first constraint condition is satisfied, the ROI extracting unit 1305 extracts the contour as the region of interest from the binary image.

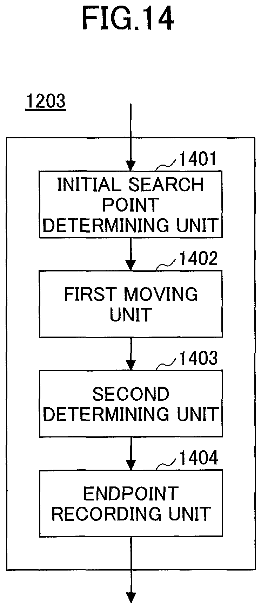

FIG. 14 is a block diagram illustrating a detailed configuration of the searching unit 1203 in FIG. 12. As illustrated in FIG. 14, the searching unit 1203 includes an initial search point determining unit 1401, a first moving unit 1402, a second determining unit 1403, and an endpoint recording unit 1404.

The initial search point determining unit 1401 determines a plurality of initial search points for searching for the plurality of endpoints.

The first moving unit 1402 moves the plurality of initial search points along the contour, respectively. Namely, the first moving unit 1402 moves the plurality of initial search points along respective portions of the contour where the respective initial search points are located.

The second determining unit 1403 analyzes moving tracks of the initial search points, and determines whether the initial search points reach the respective endpoints.

When it is determined that the initial search points reach the respective endpoints, the endpoint recording unit 1404 records positions of the respective endpoints.

In the following, detailed configuration of the searching unit 1203 in the road surface marking detecting apparatus according to specific examples of the second embodiment of the present invention will be described.

[First Example]

In a first example, the road surface marking is a stop line, the plurality of initial search points includes a left initial search point and a right initial search point, and the plurality of endpoints includes a left endpoint and a right endpoint. Once the left endpoint and the right endpoint of the stop line are determined, an accurate position of the stop line can be determined.

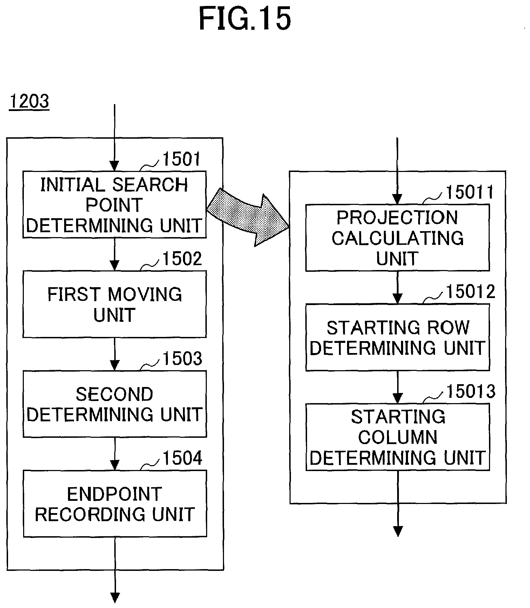

FIG. 15 is a block diagram illustrating a functional configuration of a searching unit in the road surface marking detecting apparatus according to a first example of the second embodiment of the present invention. As illustrated in FIG. 15, the searching unit according to the first example includes an initial search point determining unit 1501, a first moving unit 1502, a second determining unit 1503, and an endpoint recording unit 1504.

The initial search point determining unit 1501 includes a projection calculating unit 15011, a starting row determining unit 15012, and a starting column determining unit 15013. The projection calculating unit 15011 calculates projection of each pixel in the region of interest on a Y-axis. The starting row determining unit 15012 determines a starting row of the initial search points based on a projection position on the Y-axis where a largest of number of pixels are projected. The starting column determining unit 15013 draws a horizontal line on the starting row, detects intersection points between the contour in the region of interest and the horizontal line, and determines a starting column of the initial search points based on position distribution of the intersection points. Here, an X-axis is a horizontal direction, and the Y-axis is a vertical direction. Since the intersection points (connection points) between a lane line and a stop line exist inside a valid contour, column positions of the intersection points have a distinctive feature. Thus, it may be determined whether the detection result of the intersection points satisfies a constraint condition, for example, it may be determined whether the number of the intersection points is within a certain range, or it may be determined whether the intersection points are distributed on both sides of the region of interest. If the detection result of the intersection points satisfies the constraint condition, the starting row and the starting column of the initial search points, namely the coordinate on the Y-axis and a coordinate on an X-axis of the initial search points are output. If the detection result of the intersection points does not satisfy the constraint condition, it is determined that the region of interest does not include a stop line.

A moving direction of the initial search point includes a main direction and an orthogonal direction orthogonal to the main direction. The main direction of the left initial search point is a right direction, and the main direction of the right initial search point is a left direction.

The first moving unit 1502 moves initial search points in an upward direction until the initial search points reach respective pixels whose pixel value is zero, then moves the initial search points in the respective main directions from respective current positions until the initial search points reach respective pixels whose pixel value is zero. The above movement process is repeated in a manner that the initial search points are moved in the upward direction and then in the respective main directions. Note that each round of moving includes moving in the upward direction and moving in the respective main directions.

The second determining unit 1503 determines whether the initial search points reach respective connection points (intersection points) between the contour and a horizontal stop line, by analyzing respective lengths of the moving tracks of the initial search points in the respective main directions.

As an example of the left initial search point, the movement amount of each time of moving in the right direction is monitored, and a condition that the movement amount of moving in the right direction is greater than a predetermined threshold is set as a search termination condition. That is to say, when the movement amount in the right direction is greater than the predetermined threshold, it is determined that the left initial search point has reached the left endpoint.

Preferably, the second determining unit 1503 may (a) determines whether a second constraint condition is satisfied; and (b) continues determining whether the initial search points reach the respective connection points between the contour and the horizontal stop line, when the second constraint condition is satisfied.

Specifically, in the process of moving the initial search points, it may be further determined whether constraint conditions expressed by formulas (1) and (2) are satisfied.

$$\begin{cases} I(x, y\text{-}\Delta y_i) = 1 \\ I(x + \Delta x_i, y\text{-}\Delta y_i) = 1 \\ I(x, y + \Delta y_i) = 0 \\ k_i = \dfrac{\Delta y_i}{\Delta x_i} \end{cases} \qquad (1)$$

Where I is a region of interest in a binary image, I(x, y) represents a pixel value of a search point in I, $\Delta x_i$ and $\Delta y_i$ are offsets of i-th movement of the search point in the main direction and the orthogonal direction orthogonal to the main direction, respectively, and $k_i$ represents a search direction. I(x, y-$\Delta y_i$)=1 indicates that a pixel value obtained by moving the search point upward by one step is 1, I(x, y+$\Delta y_i$)=0 indicates that a pixel value obtained by moving the search point downward by one step is 0, and I(x+$\Delta x_i$, y-$\Delta y_i$)=1 indicates that a pixel value obtained by moving the search point upward by one step and then rightward by one step is 1. Here, an XY coordinate system is defined such that a positive direction of an X-axis is horizontally rightward, a positive direction of a Y-axis is vertically downward, and an origin of the coordinate is located at an upper left corner.

As indicated by constraint conditions expressed by formula (1), when moving the search point upward, it is determined not only whether a pixel value obtained by moving the search point upward by one step is 1, but also whether a pixel value obtained by moving the search point downward by one step is 0. If a pixel value obtained by moving the search point upward by one step is 1 and a pixel value obtained by moving the search point downward by one step is also 1, namely, if the constraint conditions expressed by formula (1) are not satisfied, it is determined that the contour is not a contour to be detected, and processing proceeds to step S106 in FIG. 1. If a pixel value obtained by moving the search point upward by one step is 1 and a pixel value obtained by moving the search point downward by one step is 0, namely, if the constraint conditions expressed by formula (1) are satisfied, the following moving is continued.

$$\begin{cases} |k_i \text{-} \overline{k}_{i-1}| < thr1 \\ \overline{k}_{i-1} = \dfrac{1}{i-1}\sum_{j=1}^{i-1} k_j \\ \sum_i \Delta x_i > thr2 \\ \sum_i \Delta y_i > thr3 \end{cases} \qquad (2)$$

Where thr1 is a constraint threshold of the search direction for ensuring that a moving direction approaches to an average direction of previous movements, thr2 is a constraint threshold of a search length in the main direction, and thr3 is a constraint threshold of a search length in the orthogonal direction. The constraint thresholds of the search lengths in the main direction and the orthogonal direction may be constraint conditions for further verification when a search termination condition has been satisfied. Alternatively, the constraint thresholds of the search lengths in the main direction and the orthogonal direction may be determination conditions for terminating the search or re-adjusting the initial search points when a search termination condition has not been satisfied.

By setting the above constraint conditions, a contour that might not be a stop line to be recognized can be removed, and a probability of erroneous determination can be reduced.

[Second Example]

The above first example is a case where the condition of the road surface marking is ideal. By the above processing in the first example, the left and right initial search points can reach the positions of the left and right endpoints, respectively. However, in actuality, there are cases where left and right endpoints cannot be successfully found. The apparatus for searching for endpoints according to a second example can be applied to a case where the road surface marking is not ideal.

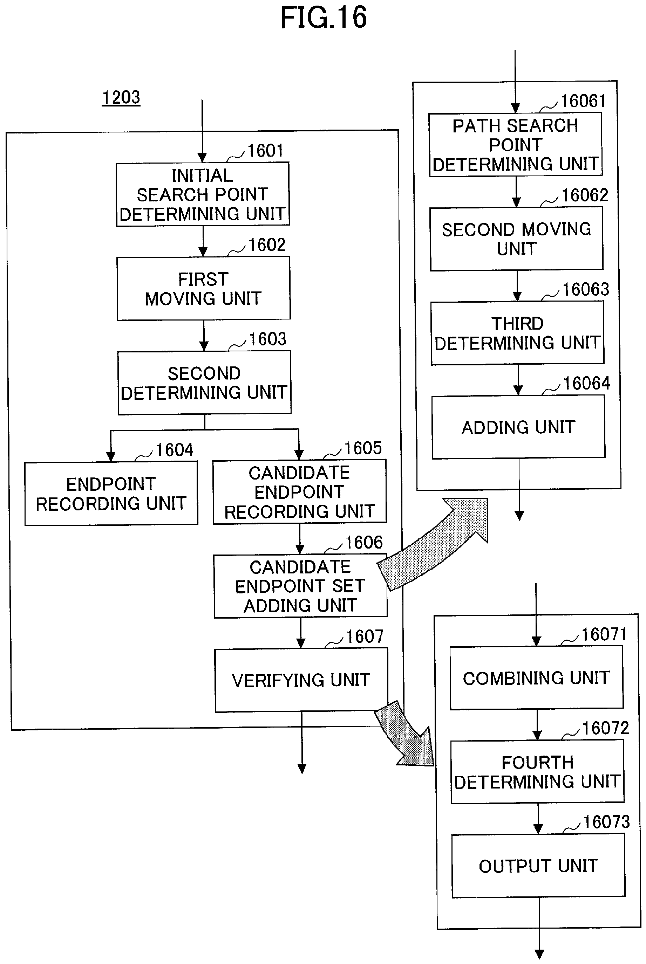

FIG. 16 is a block diagram illustrating a detailed configuration of the searching unit 1203 in the road surface marking detecting apparatus according to a second example of the second embodiment of the present invention. As illustrated in FIG. 16, similarly to the first example, the searching unit 1203 according to the second example includes an initial search point determining unit 1601, a first moving unit 1602, a second determining unit 1603, and an endpoint recording unit 1604.

The second example is different from the first example in that the searching unit 1203 according to the second example further includes a candidate endpoint recording unit 1605, a candidate endpoint set adding unit 1606, and a verifying unit 1607.

The candidate endpoint recording unit 1605 records an endpoint obtained by the search in a candidate endpoint set, when endpoint search does not terminate normally. The normal termination means that left and right endpoints are determined when the above search termination condition is satisfied. This case corresponds to the case described in the first example. Abnormal termination of the search includes but is not limited to the following cases. For example, a search point stops at an abnormal point and cannot be further moved in a search process using an initial search point, since a road surface marking is not ideal. Alternatively, only an endpoint on one side can be found, since there is only a lane line of one side in a stop line region. If an initial search point stops at a position and cannot be further moved, the position where the initial search point finally reaches is recorded as a candidate endpoint in a candidate endpoint set. Alternatively, if only a left endpoint corresponding to a left initial search point or a right endpoint corresponding to a right initial search point was found, the left endpoint or the right endpoint is recorded as a candidate endpoint in a candidate endpoint set.

The candidate endpoint set adding unit 1606 performs a path search based on position of a candidate endpoint in the candidate endpoint set, and adds an endpoint obtained by the path search into the candidate endpoint set.

Specifically, the candidate endpoint set adding unit 1606 includes a path search point determining unit 16061, a second moving unit 16062, a third determining unit 16063, and an adding unit 16064.

The path search point determining unit 16061 movies the candidate endpoint in the candidate endpoint set serving as a starting point of the path search in a historical path direction, until a moving track intersects with a straight line in a horizontal direction at an intersection point serving as a path search point.

The second moving unit 16062 moves the path search point in the main direction.

The third determining unit 16063 determines whether the path search point reaches an endpoint on a side of the main direction.

The second moving unit 16062 moves the endpoint in an opposite direction opposite to the main direction to perform a search when the path search point reaches the endpoint on the side of the main direction, and the third determining unit 16063 determines whether the endpoint reaches an endpoint on a side of the opposite direction.

The adding unit 16064 adds the endpoint on the side of the main direction and the endpoint on the side of the opposite direction into the candidate endpoint set.

FIGs. 9A and 9B illustrate a detailed processing of step S807 in an example of a left candidate endpoint. First, point S_L in the candidate endpoint set is set as a starting point of the path search, point S_L is moved in a historical path direction until a moving track intersects with a straight line in a horizontal direction at an intersection point, and the intersection point is set as a path search point. Here, the historical path direction may be a slope of a previous movement immediately before a current movement, and may also be an average slope of all previous movements.

Next, the path search point is moved in the main direction, namely, the path search point is moved rightward as illustrated in FIG. 9B, and it is determined whether the path search point reaches an endpoint on a side of the main direction.

For example, since a connection point between a stop line and a lane line is an inside point inside of the lane line, it may be determined whether the path search point reaches a right endpoint, by determining whether a pixel value obtained by moving the path search point rightward is 1, a pixel value obtained by moving the path search point upward is 1 and a pixel value obtained by moving the path search point downward is 1.

Preferably, in the process of the path search, it may be further determined whether constraint conditions expressed by formulas (3) and (4) are satisfied.

$$\begin{cases} I(x, y + \Delta y_i) = 0 \\ I(x + \Delta x_i, y) = 1 \\ I(x, y - \Delta y_i) = 1 \\ k_i = \dfrac{\Delta y_i}{\Delta x_i} \end{cases} \quad (3)$$

Where I is a region of interest in a binary image, I(x, y) represents a pixel value of a search point in I, $\Delta x_i$ and $\Delta y_i$ are offsets of i-th movement of the search point in the main direction and the orthogonal direction orthogonal to the main direction, respectively, and $k_i$ represents a search direction. I(x, y+$\Delta y_i$)=0 indicates that a pixel value obtained by moving the search point downward by one step is 0, I(x+$\Delta x_i$, y)=1 indicates that a pixel value obtained by moving the search point rightward by one step is 1, and I(x, y-$\Delta y_i$)=1 indicates that a pixel value obtained by moving the search point upward by one step is 1. Here, an XY coordinate system is defined such that a positive direction of an X-axis is horizontally rightward, a positive direction of a Y-axis is vertically downward, and an origin of the coordinate is located at an upper left corner.

As indicated by constraint conditions expressed by formula (3), when moving the search point rightward, it is determined whether a pixel value obtained by moving the search point upward by one step is 1, whether a pixel value obtained by moving the search point downward by one step is 0, and whether a pixel value obtained by moving the search point rightward by one step is 1. If the constraint conditions expressed by formula (3) are not satisfied, it is determined that the contour is not a contour to be detected, and processing proceeds to step S106 in FIG. 1. If the constraint conditions expressed by formula (3) are satisfied, the following moving is continued.

$$\begin{cases} |k_i - \overline{k}_{i-1}| < thr4 \\ \overline{k}_{i-1} = \dfrac{1}{i-1}\displaystyle\sum_{j=1}^{i-1} k_j \\ \displaystyle\sum_i \Delta x_i > thr5 \\ \displaystyle\sum_i \Delta y_i > thr6 \end{cases} \qquad (4)$$

Where thr4 is a constraint threshold of the search direction for ensuring that a moving direction approaches to an average direction of previous movements, thr5 is a constraint threshold of a search length in the main direction, and thr6 is a constraint threshold of a search length in the orthogonal direction. The constraint thresholds of the search lengths in the main direction and the orthogonal direction may be constraint conditions for further verification when a search termination condition has been satisfied. Alternatively, the constraint thresholds of the search lengths in the main direction and the orthogonal direction may be determination conditions for terminating the search or re-adjusting the initial search points when a search termination condition has not been satisfied.

By setting the above constraint conditions, a contour that might not be a stop line to be recognized can be removed, and a probability of erroneous determination can be reduced.

When it is determined that the path search point reaches the endpoint on the side of the main direction, the endpoint on the side of the main direction, namely point Q_R1 in FIG. 9B is obtained. Then, endpoint Q_R1 is moved in an opposite direction opposite to the main direction to perform a search, it is determined whether the endpoint reaches an endpoint on a side of the opposite direction, and an opposite endpoint, namely point Q_L1 in FIG. 9B is obtained. The adding unit 16064 adds endpoint Q_R1 on the side of the main direction and endpoint Q_L1 on the side of the opposite direction into the candidate endpoint set.

The verifying unit 1607 verifies whether the candidate endpoints in the candidate endpoint set are the endpoints of the stop line based on a feature extracted from the candidate endpoint set.

Specifically, the verifying unit 1607 includes a combining unit 16071, a fourth determining unit 16072, and an output unit 16073.

The combining unit 16071 classifies the candidate endpoints in the candidate endpoint set into candidate left endpoints and candidate right endpoints, and combines each of the candidate left endpoints and each of the candidate right endpoints to form left-and-right point pairs and respective candidate lines.

The fourth determining unit 16072 extracts features of the candidate lines, such as slopes, average values of Y-axis coordinates, average values of color, neighborhood differences in color or the like, and determines whether extracted features of the candidate lines satisfy a third constraint condition (for example, whether the slopes are within a certain range).

The output unit 16073 determines the candidate line whose extracted feature satisfies the third constraint condition as the stop line, and outputs endpoints of the determined candidate line.

In the second example, the apparatus for detecting a stop line using the process of optimization and verification of endpoints can be applied to various road surface conditions.

[Third Example]

In the first example and the second example, the road surface marking detecting apparatuses are described by taking a stop line as an example. However, the present invention is not limited to these examples. In a third example, the road surface marking may be a rhombus marking for warning a driver to slow down. The plurality of initial search points includes a left initial search point and a right initial search point, and the plurality of endpoints includes a left endpoint, a right endpoint and a bottom endpoint. Once the left endpoint, the right endpoint and the bottom endpoint of the rhombus marking are determined, an accurate position of the rhombus marking can be determined.

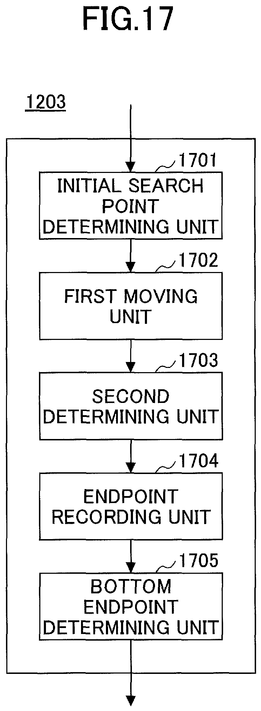

FIG. 17 is a block diagram illustrating a detailed configuration of a searching unit 1203 in the road surface marking detecting apparatus according to a third example of the second embodiment of the present invention. As illustrated in FIG. 17, similarly to the first example, the searching unit 1203 according to the third example includes an initial search point determining unit 1701, a first moving unit 1702, a second determining unit 1703, an endpoint recording unit 1704, and a bottom endpoint determining unit 1705.

The initial search point determining unit 1701 determines a left initial search point for searching for the left endpoint and a right initial search point for searching for the right endpoint. As important information that simplifies the calculation for searching the bottom endpoint, the left endpoint and the right endpoint are first obtained by the initial search point determining unit 1701. In order to perform the search more efficiently, a starting point as close as possible to a real ending point is selected. According to the structure of the rhombus marking, the contour of the rhombus marking in a gradient image is a dual-rhombus shape. The contour is divided into segments with a zero gradient value by scanning lines crossing the contour, and each of the scanning lines intersects with the contour at two to four intersection points. The longest segment is near a center of the rhombus shape. After a segment with a largest blank position inside the rhombus shape is found, the first and last intersections are obtained as the left and right initial search points.

The first moving unit 1702 moves the left initial search point and the right initial search point along the contour, respectively. Namely, the first moving unit 1702 moves the left initial search point and the right initial search point along respective portions of the contour where the respective initial search points are located.

In a binary image, the endpoint of the rhombus shape is a corner, and there are three neighborhood pixels with a zero pixel value in the four neighborhood pixels of the endpoint. According to this principle, a searching method in an orthogonal direction is proposed to make a starting point reach a real ending point. More specifically, the initial search points are alternately moved in respective main directions and respective orthogonal directions. As an example of the left endpoint, the main directions are left and right directions, and the orthogonal directions are a vertically upward direction and a vertically downward direction. In this way, if the contour is an actual rhombus shape, the initial search points can be moved along an outer edge and reach an ending point. For the right search, a starting point is first moved to the outer edge, since intersection points occur on an inner edge.

The second determining unit 1703 analyzes moving tracks of the initial search points, and determines whether the initial search points reach respective endpoints.

When it is determined that the initial search points reach respective endpoints, the endpoint recording unit 1704 records positions of the respective endpoints.

After a left endpoint and a right endpoint have been obtained, the bottom endpoint determining unit 1705 obtains bottom endpoint based on the left endpoint and the right endpoint. Specifically, after the left and right endpoints are obtained, a search area of the bottom endpoint is narrowed. In the new search area, the number of intersection points between the scanning lines and the contour is calculated. The bottom endpoint can be found based on the scanning line with only one intersection point.

In addition, more preferably, the searching unit according to the third example may further include a verifying unit for verifying the endpoints to reduce a probability of erroneous determination.

Specifically, since the road surface markings are usually painted in white, the three endpoints may be verified based on color information. According to the binary image, a sampling for pixels near the obtained endpoints that belong to the rhombus shape and to a road region is performed. Then, a similarity of the two sets of pixels is calculated. If the similarity is too high, the endpoint will be abandoned.

However, the color information is not stable enough due to changes in lighting. Therefore, the endpoints are further verified based on relative positions and proportional relationships among the endpoints. Furthermore, the endpoints are also verified based on whether there is a linear path between the left (right) endpoint and the bottom endpoint. A sample is selected by finding an intersection point of scanning lines, and a contour between a lower endpoint and a left endpoint. Then, slopes of lines formed by the endpoints and the sample are calculated. The endpoint is accepted only if all slopes are similar to a lower left direction.

[Third Embodiment]

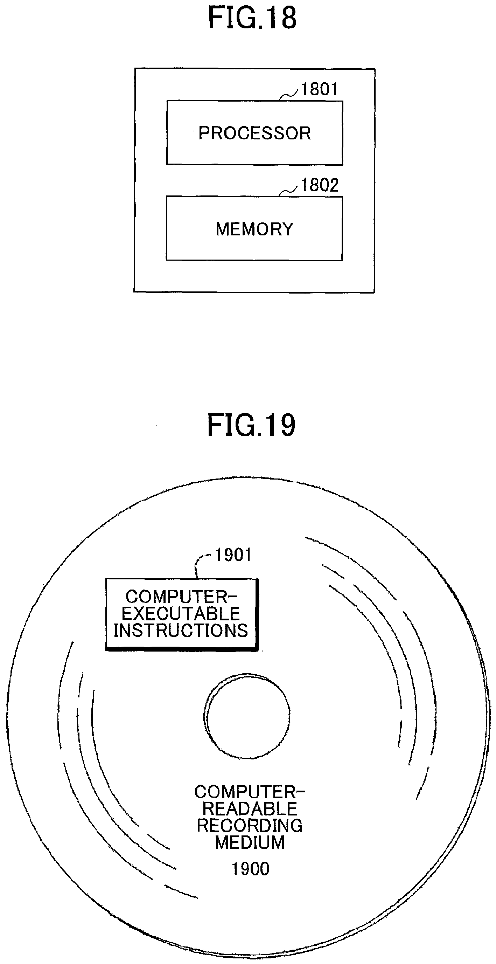

FIG. 18 is a block diagram illustrating a hardware configuration of a road surface marking detecting device according to a third embodiment of the present invention. As illustrated in FIG. 18, the road surface marking detecting device according to a third embodiment of the present invention includes at least one processor 1801 and a memory 1802 for storing computer-readable instructions. When the computer-executable instructions are executed by the processor 1801, the computer-executable instructions cause the processor 1801 to carry out the road surface marking detecting method described in the above first embodiment of the present invention.

[Fourth Embodiment]

FIG. 19 is a schematic diagram illustrating a non-transitory computer-readable recording medium according to a fourth embodiment of the present invention. As illustrated in FIG. 19, the non-transitory computer-readable recording medium 1900 has computer-executable instructions 1901 for execution by at least one processor. When the computer-executable instructions 1901 are executed, the computer-executable instructions 1901 cause the at least one processor to carry out the road surface marking detecting method described in the above first embodiment of the present invention.

The units, apparatuses, devices, steps, methods and system are just examples, the connection, placement and configuration illustrated in the block diagrams related to the present invention are not limited to these examples, and the units, apparatuses, devices, steps, methods and system may be connected, placed or configured in any way. The terms "comprise", "include" and "have" are open-form terms, which mean and may be changed into "include and is not limited to". The terms "or" and "and" mean and may be changed into "and/or", unless the context is clearly not applicable. The term "such as" means and may be changed to "such as, but not limited to".

Steps of the above method may be performed in the time order, however the performing sequence is not limited to the time order. Any steps may be performed in parallel or independently.

The above embodiments may be realized by hardware, software, firmware or any combination thereof. When the embodiment is implemented by software, a computer software product according to the embodiment may be stored in a computer-readable medium as one or more commands. The recording medium may be any real medium that can be accessed by a computer (such as a personal computer, a server, a network device or the like). Such a computer-readable medium includes a RAM, a ROM, an EEPROM, a CD-ROM or other laser discs, a magnetic disk or other magnetic memory, or any other real media that carry or store commands, data or program codes and are accessed by the computer.

The present invention is not limited to the specifically disclosed embodiments, and various modifications, combinations and replacements may be made without departing from the scope of the present invention.

The present application claims priority under 35 U.S.C. §119 to Chinese Application No. 201810095668.7 filed on January 31, 2018, the entire contents of which are incorporated herein by reference.

## Claims

1. A method for detecting a road surface marking, the method comprising:

    receiving an input image of one frame;
    analyzing a contour feature of the input image, and extracting a region of interest including the road surface marking from the input image;
    searching the region of interest for a plurality of endpoints of the road surface marking; and
    determining the road surface marking by joining the plurality of endpoints.

2. The method for detecting a road surface marking according to claim 1,
   wherein analyzing the contour feature of the input image, and extracting the region of interest including the road surface marking from the input image includes
   calculating gradients of the input image;
   generating, based on magnitude of the gradients, a binary image;
   extracting at least one contour from the binary image, and calculating a feature of the at least one contour;
   determining whether the feature of the at least one contour satisfies a first constraint condition; and

extracting the contour serving as the region of interest from the binary image, when the first constraint condition is satisfied.

3. The method for detecting a road surface marking according to claim 2,
   wherein searching the region of interest for the plurality of endpoints of the road surface marking includes
   determining a plurality of initial search points for searching for the plurality of endpoints;
   moving the plurality of initial search points along the contour, respectively;
   analyzing moving tracks of the initial search points, and determining whether the initial search points reach respective endpoints; and
   recording positions of the respective endpoints, when the initial search points reach the respective endpoints.

4. The method for detecting a road surface marking according to claim 3,
   wherein the road surface marking is a stop line,
   wherein determining the plurality of initial search points for searching for the plurality of endpoints includes

    calculating projection of each pixel in the region of interest on a Y-axis;
    determining, based on a projection position on the Y-axis where a largest of number of pixels are projected, a starting row of the initial search points;
    drawing a horizontal line on the starting row, and detecting intersection points between the contour in the region of interest and the horizontal line; and
    determining, based on position distribution of the intersection points, a starting column of the initial search points, and

   wherein an X-axis is a horizontal direction, and the Y-axis is a vertical direction.

5. The method for detecting a road surface marking according to claim 3,
   wherein the plurality of initial search points includes a left initial search point and a right initial search point, and the plurality of endpoints includes a left endpoint and a right endpoint,
   wherein a moving direction of the initial search point includes a main direction and an orthogonal direction orthogonal to the main direction, the main direction of the left initial search point is a right direction, and the main direction of the right initial search point is a left direction,
   wherein moving the left initial search point and the right initial search point along the contour, respectively includes

moving the initial search points in an upward direction until the initial search points reach respective pixels whose pixel value is zero, then moving the initial search points in the respective main directions from respective current positions until the initial search points reach respective pixels whose pixel value is zero; and repeating the moving of the initial search points in a manner that the initial search points are moved in the upward direction and then in the respective main directions, and

wherein analyzing the moving tracks of the initial search points, and determining whether the initial search points reach the respective endpoints includes

determining, by analyzing respective lengths of the moving tracks of the initial search points in the respective main directions, whether the initial search points reach respective connection points between the contour and a horizontal stop line.

6. The method for detecting a road surface marking according to claim 5, wherein analyzing the moving tracks of the initial search points, and determining whether the initial search points reach the respective endpoints includes determining whether a second constraint condition is satisfied; and continuing determining whether the initial search points reach the respective connection points between the contour and the horizontal stop line, when the second constraint condition is satisfied.

7. The method for detecting a road surface marking according to claim 5, wherein searching the region of interest for the plurality of endpoints of the road surface marking includes recording an endpoint obtained by the search in a candidate endpoint set, when endpoint search does not terminate normally; performing a path search based on position of a candidate endpoint in the candidate endpoint set, and adding an endpoint obtained by the path search into the candidate endpoint set; and verifying, based on a feature extracted from the candidate endpoint set, whether the candidate endpoints in the candidate endpoint set are the endpoints of the stop line.

8. The method for detecting a road surface marking according to claim 7,

wherein performing the path search based on the position of the candidate endpoint in the candidate endpoint set, and adding the endpoint obtained by the path search into the candidate endpoint set includes moving the candidate endpoint in the candidate endpoint set serving as a starting point of the path search in a historical path direction, until a moving track intersects with a straight line in a horizontal direction at an intersection point serving as a path search point; moving the path search point in the main direction, and determining whether the path search point reaches an endpoint on a side of the main direction; moving the endpoint in an opposite direction opposite to the main direction to perform a search when the path search point reaches the endpoint on the side of the main direction, and determining whether the endpoint reaches an endpoint on a side of the opposite direction; and adding the endpoint on the side of the main direction and the endpoint on the side of the opposite direction into the candidate endpoint set.

9. The method for detecting a road surface marking according to claim 7, wherein verifying, based on the feature extracted from the candidate endpoint set, whether the candidate endpoints in the candidate endpoint set are the endpoints of the stop line includes classifying the candidate endpoints in the candidate endpoint set into candidate left endpoints and candidate right endpoints; combining each of the candidate left endpoints and each of the candidate right endpoints to form left-and-right point pairs and respective candidate lines; determining whether extracted features of the candidate lines satisfy a third constraint condition; and determining the candidate line whose extracted feature satisfies the third constraint condition as the stop line, and outputting endpoints of the determined candidate line.

10. The method for detecting a road surface marking according to claim 3, wherein the road surface marking is a rhombus marking, and wherein determining the plurality of initial search points for searching for the plurality of endpoints includes

determining whether a left endpoint and a right endpoint have been obtained; and obtaining a bottom endpoint based on the left endpoint and the right endpoint, when a left endpoint and a right endpoint have been obtained.

11. An apparatus for detecting a road surface marking, the apparatus comprising:

a receiving unit configured to receive an input image of one frame;
an extracting unit configured to analyze a contour feature of the input image, and extract a region of interest including the road surface marking from the input image;
a searching unit configured to search the region of interest for a plurality of endpoints of the road surface marking; and
a determining unit configured to determine the road surface marking by joining the plurality of endpoints.

12. A device for detecting a road surface marking, the device comprising:

a memory storing computer-readable instructions; and
one or more processors configured to execute the computer-readable instructions,
wherein the computer-executable instructions, when executed, cause the one or more processors to carry out the method for detecting a road surface marking according to any one of claims 1 to 10.

13. A non-transitory computer-readable recording medium having computer-executable instructions for execution by one or more processors,
wherein, the computer-executable instructions, when executed, cause the one or more processors to carry out the method for detecting a road surface marking according to any one of claims 1 to 10.

# FIG.1

```
                    ┌─────────┐
                    │  START  │
                    └────┬────┘
                         │           S101
                         ▼
       ┌──────────────────────────────────┐
       │  RECEIVE INPUT IMAGE OF ONE       │
       │  FRAME                            │
       └────────────────┬─────────────────┘
                         │           S102
                         ▼
       ┌──────────────────────────────────┐
       │  ANALYZE CONTOUR FEATURE          │
       │  OF INPUT IMAGE, AND              │
       │  EXTRACT REGION OF                │
       │  INTEREST INCLUDING ROAD          │
       │  SURFACE MARKING FROM             │
       │  INPUT IMAGE                      │
       └────────────────┬─────────────────┘
                         │           S103
                         ▼
       ┌──────────────────────────────────┐
       │  SEARCH EACH OF REGIONS OF        │
       │  INTEREST FOR ENDPOINTS OF        │
       │  ROAD SURFACE MARKING             │
       └────────────────┬─────────────────┘
```

S101 — RECEIVE INPUT IMAGE OF ONE FRAME

S102 — ANALYZE CONTOUR FEATURE OF INPUT IMAGE, AND EXTRACT REGION OF INTEREST INCLUDING ROAD SURFACE MARKING FROM INPUT IMAGE

S103 — SEARCH EACH OF REGIONS OF INTEREST FOR ENDPOINTS OF ROAD SURFACE MARKING

S104 — HAVE ENDPOINTS OF ROAD SURFACE MARKING BEEN DETECTED ?    NO

YES

S105 — DETERMINE ROAD SURFACE MARKING BY JOINING ENDPOINTS

S106 — OUTPUT DETERMINATION RESULT INDICATING THAT CURRENT REGION OF INTEREST DOES NOT INCLUDE ROAD SURFACE MARKING TO BE RECOGNIZED

S107 — IS PROCESSING FOR ALL REGIONS OF INTEREST COMPLETED ?    NO

YES

END

18

# FIG.2

START

CALCULATE GRADIENTS OF INPUT IMAGE — S201

GENERATE BINARY IMAGE BASED ON MAGNITUDE OF GRADIENTS — S202

EXTRACT CONTOUR FROM BINARY IMAGE, AND CALCULATE FEATURE OF EACH CONTOUR — S203

DOES FEATURE OF CONTOUR SATISFY FIRST CONSTRAINT CONDITION ? — S204   NO

YES

EXTRACT CONTOUR FROM BINARY IMAGE AS REGION OF INTEREST — S205

IS DETERMINATION FOR ALL CONTOURS COMPLETED ? — S206   NO

YES

DOES CONTOUR WHOSE FEATURE SATISFIES FIRST CONSTRAINT CONDITION EXIST? — S207   YES → S103

NO

OUTPUT DETERMINATION RESULT INDICATING THAT INPUT IMAGE DOES NOT INCLUDE ROAD SURFACE MARKING TO BE RECOGNIZED — S208

END

# FIG.3

$$( \text{START} )$$

↓ S301

DETERMINE INITIAL SEARCH
POINTS FOR SEARCHING FOR
ENDPOINTS

↓ S302

MOVE INITIAL SEARCH POINTS
ALONG CONTOUR, RESPECTIVELY

↓ S303

ANALYZE MOVING TRACKS OF
INITIAL SEARCH POINTS

↓

S304

DO
INITIAL SEARCH
POINTS REACH RESPECTIVE
ENDPOINTS
?

NO

YES ↓ S305

RECORD POSITIONS OF
RESPECTIVE ENDPOINTS

# FIG.4A

# FIG.4B

OFFSET FROM
PEAK POSITION

INITIAL SEARCH POINT

# FIG.5

START

_S501

DETERMINE LEFT INITIAL SEARCH
POINT FOR SEARCHING FOR LEFT
ENDPOINT AND RIGHT INITIAL
SEARCH POINT FOR SEARCHING
FOR RIGHT ENDPOINT

_S502

MOVE LEFT INITIAL SEARCH POINT
AND RIGHT INITIAL SEARCH POINT
ALONG CONTOUR, RESPECTIVELY

_S503

ANALYZE MOVING TRACKS OF
INITIAL SEARCH POINTS

_S504

DO
INITIAL SEARCH
POINTS REACH RESPECTIVE
ENDPOINTS
?

NO

YES

_S505

RECORD POSITIONS OF
RESPECTIVE ENDPOINTS

FIG.6

FIG.7A

FIG.7B

FIG.7C

# FIG.8

START

DETERMINE LEFT INITIAL SEARCH POINT FOR SEARCHING FOR LEFT ENDPOINT AND RIGHT INITIAL SEARCH POINT FOR SEARCHING FOR RIGHT ENDPOINT — S801

MOVE LEFT INITIAL SEARCH POINT AND RIGHT INITIAL SEARCH POINT ALONG CONTOUR, RESPECTIVELY — S802

ANALYZE MOVING TRACKS OF INITIAL SEARCH POINTS — S803

DOES ENDPOINT SEARCH TERMINATE NORMALLY? — S804

YES → OUTPUT LEFT ENDPOINT AND RIGHT ENDPOINT — S805

NO ↓

RECORD ENDPOINT OBTAINED BY SEARCH IN CANDIDATE ENDPOINT SET — S806

PERFORM PATH SEARCH BASED ON POSITION OF CANDIDATE ENDPOINT IN CANDIDATE ENDPOINT SET, AND ADD ENDPOINT OBTAINED BY PATH SEARCH INTO CANDIDATE ENDPOINT SET — S807

VERIFY CANDIDATE ENDPOINTS BASED ON FEATURE EXTRACTED FROM CANDIDATE ENDPOINT SET — S808

ENDPOINTS OF STOP LINE? — S809

YES ↓ OUTPUT ENDPOINTS OF STOP LINE — S810

NO ↓ OUTPUT DETERMINATION RESULT INDICATING THAT CURRENT REGION OF INTEREST DOES NOT INCLUDE STOP LINE — S811

## FIG.9A

S_L

## FIG.9B

Q_L1     Q_R1

## FIG.10

roidata

# FIG.11

START

S1101

DETERMINE LEFT INITIAL SEARCH POINT FOR SEARCHING FOR LEFT ENDPOINT AND RIGHT INITIAL SEARCH POINT FOR SEARCHING FOR RIGHT ENDPOINT

S1102

MOVE LEFT INITIAL SEARCH POINT AND RIGHT INITIAL SEARCH POINT ALONG CONTOUR, RESPECTIVELY

S1103

ANALYZE MOVING TRACKS OF INITIAL SEARCH POINTS

S1104

DO INITIAL SEARCH POINTS REACH RESPECTIVE ENDPOINTS ?

NO

YES

S1105

RECORD POSITIONS OF RESPECTIVE ENDPOINTS

S1106

HAVE LEFT ENDPOINT AND RIGHT ENDPOINT BEEN OBTAINED?

NO

YES

S1107

OBTAIN BOTTOM ENDPOINT BASED ON LEFT ENDPOINT AND RIGHT ENDPOINT

# FIG.12

<u>1200</u>

```
        ↓
    ┌──────────────────────────────────┐
    │           ⌇1201                   │
    │   ┌──────────────────────┐        │
    │   │   RECEIVING UNIT      │        │
    │   └──────────────────────┘        │
    │           ↓  ⌇1202               │
    │   ┌──────────────────────┐        │
    │   │   EXTRACTING UNIT     │        │
    │   └──────────────────────┘        │
    │           ↓  ⌇1203               │
    │   ┌──────────────────────┐        │
    │   │   SEARCHING UNIT      │        │
    │   └──────────────────────┘        │
    │           ↓  ⌇1204               │
    │   ┌──────────────────────┐        │
    │   │  DETERMINING UNIT     │        │
    │   └──────────────────────┘        │
    │           ↓                       │
    └──────────────────────────────────┘
                ↓
```

# FIG.13

<u>1202</u>

```
                    ~1301
        ┌──────────────────┐
        │     GRADIENT     │
        │   CALCULATING    │
        │       UNIT       │
        └──────────────────┘
                    ~1302
        ┌──────────────────┐
        │   BINARY IMAGE   │
        │  GENERATING UNIT │
        └──────────────────┘
                    ~1303
        ┌──────────────────┐
        │     CONTOUR      │
        │ EXTRACTING UNIT  │
        └──────────────────┘
                    ~1304
        ┌──────────────────┐
        │      FIRST       │
        │ DETERMINING UNIT │
        └──────────────────┘
                    ~1305
        ┌──────────────────┐
        │  ROI EXTRACTING  │
        │       UNIT       │
        └──────────────────┘
```

# FIG.14

<u>1203</u>

INITIAL SEARCH
POINT
DETERMINING UNIT ~1401

FIRST MOVING
UNIT ~1402

SECOND
DETERMINING UNIT ~1403

ENDPOINT
RECORDING UNIT ~1404

# FIG.15

<u>1203</u>

```
┌─────────────────────────┐
│  ┌──────────────────┐    │        ┌─────────────────────────┐
│  │      1501        │    │        │                         │
│  │  INITIAL SEARCH  │    │  ═══►  │  ┌──────────────────┐   │
│  │      POINT       │    │        │  │      15011       │   │
│  │DETERMINING UNIT  │    │        │  │   PROJECTION     │   │
│  └──────────────────┘    │        │  │  CALCULATING     │   │
│         1502             │        │  │      UNIT        │   │
│  ┌──────────────────┐    │        │  └──────────────────┘   │
│  │   FIRST MOVING   │    │        │         15012           │
│  │      UNIT        │    │        │  ┌──────────────────┐   │
│  └──────────────────┘    │        │  │  STARTING ROW    │   │
│         1503             │        │  │DETERMINING UNIT  │   │
│  ┌──────────────────┐    │        │  └──────────────────┘   │
│  │     SECOND       │    │        │         15013           │
│  │DETERMINING UNIT  │    │        │  ┌──────────────────┐   │
│  └──────────────────┘    │        │  │    STARTING      │   │
│         1504             │        │  │     COLUMN       │   │
│  ┌──────────────────┐    │        │  │DETERMINING UNIT  │   │
│  │    ENDPOINT      │    │        │  └──────────────────┘   │
│  │ RECORDING UNIT   │    │        │                         │
│  └──────────────────┘    │        └─────────────────────────┘
└─────────────────────────┘
```

# FIG.16

# FIG.17

1203

```
                    ↓
          ┌─────────────────────────┐
          │       ╭─1701            │
          │  ┌──────────────────┐   │
          │  │  INITIAL SEARCH  │   │
          │  │      POINT       │   │
          │  │ DETERMINING UNIT │   │
          │  └──────────────────┘   │
          │        ↓  ╭─1702        │
          │  ┌──────────────────┐   │
          │  │   FIRST MOVING   │   │
          │  │      UNIT        │   │
          │  └──────────────────┘   │
          │        ↓  ╭─1703        │
          │  ┌──────────────────┐   │
          │  │     SECOND       │   │
          │  │ DETERMINING UNIT │   │
          │  └──────────────────┘   │
          │        ↓  ╭─1704        │
          │  ┌──────────────────┐   │
          │  │    ENDPOINT      │   │
          │  │ RECORDING UNIT   │   │
          │  └──────────────────┘   │
          │        ↓  ╭─1705        │
          │  ┌──────────────────┐   │
          │  │     BOTTOM       │   │
          │  │    ENDPOINT      │   │
          │  │ DETERMINING UNIT │   │
          │  └──────────────────┘   │
          └─────────────────────────┘
                    ↓
```

# FIG.18

```
┌──────────────────────────────┐
│    ┌─────────────────┐~1801   │
│    │                 │        │
│    │   PROCESSOR     │        │
│    │                 │        │
│    └─────────────────┘        │
│    ┌─────────────────┐~1802   │
│    │                 │        │
│    │    MEMORY       │        │
│    │                 │        │
│    └─────────────────┘        │
└──────────────────────────────┘
```

# FIG.19

COMPUTER-
EXECUTABLE
INSTRUCTIONS
1901

COMPUTER-
READABLE
RECORDING
MEDIUM
1900

Europäisches
Patentamt

European
Patent Office

Office européen
des brevets

## EUROPEAN SEARCH REPORT

Application Number

EP 19 15 2235

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUCHOW C: "A marking-based, Flexible approach to intersection detection", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, 25 June 2005 (2005-06-25), page 60, XP031259700, ISBN: 978-0-7695-2372-9 * abstract; figure 1 * * Section II * | 1-13 | INV. G06K9/00 |
| X | ZHAO LI ET AL: "Road markings extraction based on threshold segmentation", FUZZY SYSTEMS AND KNOWLEDGE DISCOVERY (FSKD), 2012 9TH INTERNATIONAL CONFERENCE ON, IEEE, 29 May 2012 (2012-05-29), pages 1924-1928, XP032455998, DOI: 10.1109/FSKD.2012.6234167 ISBN: 978-1-4673-0025-4 * abstract; figure 3 * * Sections III.B, III.C, and IV * | 1-13 | |
| | | | TECHNICAL FIELDS SEARCHED (IPC) |
| | | | G06K |

The present search report has been drawn up for all claims

| Place of search | Date of completion of the search | Examiner |
|---|---|---|
| The Hague | 18 June 2019 | Grigorescu, Simona |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810095668